(19) **Europäisches Patentamt / European Patent Office / Office européen des brevets**

(11) **EP 4 484 614 A1**

(12) **EUROPEAN PATENT APPLICATION**
published in accordance with Art. 153(4) EPC

(43) Date of publication:
01.01.2025 Bulletin 2025/01

(21) Application number: 24772195.4

(22) Date of filing: 03.04.2024

(51) International Patent Classification (IPC):
C25B 1/18 $^{(2006.01)}$   C01B 32/935 $^{(2017.01)}$
C01B 32/942 $^{(2017.01)}$   C07C 1/32 $^{(2006.01)}$
C07C 11/24 $^{(2006.01)}$   C25B 1/135 $^{(2021.01)}$
C25B 1/14 $^{(2006.01)}$   C25B 11/046 $^{(2021.01)}$
C25D 11/00 $^{(2006.01)}$

(52) Cooperative Patent Classification (CPC):
C01B 32/935; C01B 32/942; C07C 1/32;
C07C 11/24; C25B 1/135; C25B 1/14; C25B 1/18;
C25B 11/046; C25D 11/00

(86) International application number:
PCT/JP2024/013769

(87) International publication number:
WO 2024/214616 (17.10.2024 Gazette 2024/42)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 12.04.2023 JP 2023064934
25.03.2024 JP 2024048291

(71) Applicants:
• **Daikin Industries, Ltd.**
**Osaka 530-0001 (JP)**
• **The Doshisha**
**Kyoto 602-8580 (JP)**

(72) Inventors:
• **GOTO, Takuya**
**Kyotanabe-shi**
**Kyoto**
**6100394 (JP)**

• **SUZUKI, Yuta**
**Kyotanabe-shi**
**Kyoto**
**6100394 (JP)**
• **WATANABE, Takashi**
**Kyotanabe-shi**
**Kyoto**
**6100394 (JP)**
• **ISOGAI, Tomohiro**
**Osaka-Shi**
**Osaka**
**5300001 (JP)**
• **YAMAUCHI, Akiyoshi**
**Osaka-Shi**
**Osaka**
**5300001 (JP)**
• **KISHIKAWA, Yosuke**
**Osaka-Shi**
**Osaka**
**5300001 (JP)**

(74) Representative: **Hoffmann Eitle**
**Patent- und Rechtsanwälte PartmbB**
**Arabellastraße 30**
**81925 München (DE)**

(54) **METHOD FOR PRODUCING METAL CARBIDE AND HYDROCARBON, AND CARBON-CONTAINING MEMBER**

(57) A method for producing a metal carbide, comprising: electrode preparation comprising: preparing a first molten salt containing at least one first metal ion selected from the group consisting of alkali metal ions and alkali earth metal ions, and a carbonate ion, and applying a voltage to the first molten salt to precipitate a precipitate containing carbon on a first electrode, thereby obtaining a second electrode; and electrolysis comprising applying a voltage to a second molten salt containing at least one second metal ion selected from the group consisting of alkali metal ions and alkali earth metal ions using the second electrode to obtain a carbide composition containing a carbide of the second metal.

Fig. 1

SECOND ELECTRODE
PREPARATION STEP

START

PREPARATION OF FIRST MOLTEN
SALT CONTAINING FIRST METAL
ION — S11

APPLICATION OF VOLTAGE
(PREPARATION OF SECOND
ELECTRODE) — S12

ELECTROLYSIS STEP

APPLICATION OF VOLTAGE
(PRODUCTION OF SECOND METAL
CARBIDE) — S2

END

**Description**

TECHNICAL FIELD

The present invention relates to methods for producing a metal carbide and a hydrocarbon, and a carbon-containing member.

BACKGROUND ART

Acetylene is an industrially important substance as a raw material for various organic compounds. Acetylene is usually obtained by the reaction of a metal carbide (mainly, calcium carbide) with water.
Calcium carbide is generally obtained by heating a mixture of calcined lime (calcium oxide) and coke in an electric furnace at high temperature (e.g., Patent Document 1). Patent Document 2 proposes to form coke into briquettes in advance and then mix with calcined lime upon production of calcium carbide. Patent Document 3 proposes a method for producing lithium carbide by reacting metal lithium obtained by molten electrolysis of lithium chloride with carbon powder such as carbon black. Non Patent Document 1 proposes a method for producing lithium carbide by reacting metal lithium obtained by molten salt electrolysis of lithium hydroxide with a carbon source such as carbon dioxide. Non Patent Document 2 proposes a method for producing lithium carbide by reacting metal lithium with carbon.

PRIOR ART DOCUMENTS

Patent Document

Patent Document 1: JP S61-178412 A
Patent Document 2: JP 2018-35328 A
Patent Document 3: JP H02-256626 A

Non Patent Document

Non Patent Document 1: McEnaney JM, Rohr BA, Nielander AC, Singh AR, King LA, Norskov JK, Jaramillo TF, "A cyclic electrochemical strategy to produce acetylene from CO2, CH4, or alternative carbon sources.", Sustain Energy Fuels 4:2, 752-2759 (2020)
Non Patent Document 2: Uwe Ruschewitz, "Binary and ternary carbides of alkali and alkaline-earth metals", Coordination Chemistry Reviews 244, 115-136 (2003)

SUMMARY OF THE INVENTION

PROBLEMS TO BE SOLVED BY THE INVENTION

To produce a metal carbide, the raw material is usually required to be heated to 2000°C or more. Thus, there are problems in that energy efficiency is low and a large amount of carbon dioxide is produced. In addition, Patent Documents 1 to 3 use carbon as it is as the carbon source of a metal carbide. Non Patent Document 1 discloses that, when carbon dioxide is used as the carbon source, although the yield of lithium carbide does not exceed 20% according to calculations, the yield of lithium carbide can be increased by using carbon as the carbon source. However, any experiment data supporting this are not demonstrated. Non Patent Document 2 discloses that amorphous carbon or graphite is used as the carbon source. However, to produce crystalline lithium carbide, it is required to bring the carbon source into contact with the steam of metal lithium at 800°C to 900°C or with metal lithium in an arc melting furnace at about 3500°C or more.
An object of the present disclosure is to provide a production method in which the reaction rapidly proceeds at a relatively low temperature (e.g., 800°C or less) and which is capable of efficiently obtaining a metal carbide. The present disclosure further provides a method for producing a hydrocarbon from the obtained metal carbide. In addition, the present disclosure provides a metal carbide-supporting carbon-containing member.

SOLUTIONS TO THE PROBLEMS

The present disclosure includes the following aspects.

[1] A method for producing a metal carbide, including:
an electrode preparation step including:

preparing a first molten salt containing at least one first metal ion selected from the group consisting of alkali metal ions and alkali earth metal ions, and a carbonate ion, and
applying a voltage to the first molten salt to precipitate a precipitate containing carbon on a first electrode, thereby obtaining a second electrode; and
an electrolysis step including applying a voltage to a second molten salt containing at least one second metal ion selected from the group consisting of alkali metal ions and alkali earth metal ions using the second electrode to obtain a carbide composition containing a carbide of the second metal.

[2] The method for producing a metal carbide according to the above [1], wherein the first electrode contains at least one selected from the group consisting of a transition metal and an alloy containing a transition metal.
[3] The method for producing a metal carbide according to the above [1] or [2], wherein the first electrode contains an alloy containing iron.
[4] The method for producing a metal carbide according to any one of the above [1] to [3], wherein the first electrode contains SUS304.
[5] The method for producing a metal carbide according to any one of the above [1] to [4], wherein the second molten salt is substantially free from carbonate ions.
[6] The method for producing a metal carbide according to any one of the above [1] to [5], wherein, in the electrolysis step, the first molten salt used in the electrode preparation step is used as it is as the second molten salt.
[7] The method for producing a metal carbide according to any one of the above [1] to [6], wherein the second molten salt contains at least one selected from the group consisting of a halide ion and an oxide ion as an anion.
[8] The method for producing a metal carbide according to any one of the above [1] to [7], wherein the first metal ion and the second metal ion are the same.
[9] The method for producing a metal carbide according to any one of the above [1] to [8], wherein the carbide composition further contains at least one selected from the group consisting of carbon, a simple substance, a halide, a carbonate, an oxide, a hydride, and a peroxide of the second metal, and a simple substance, a halide, a carbonate, an oxide, and a carbide of the first metal.
[10] The method for producing a metal carbide according to any one of the above [1] to [9], wherein the second molten salt contains at least one selected from the group consisting of a sodium ion, a lithium ion, and a potassium ion, and a calcium ion as the second metal ion.
[11] A method for producing a hydrocarbon, including:
an electrode preparation step including:

preparing a first molten salt containing at least one first metal ion selected from the group consisting of alkali metal ions and alkali earth metal ions, and a carbonate ion derived from carbon dioxide, and
applying a voltage to the first molten salt to precipitate a precipitate containing carbon on a first electrode, thereby obtaining a second electrode;
an electrolysis step including applying a voltage to a second molten salt containing at least one second metal ion selected from the group consisting of alkali metal ions and alkali earth metal ions using the second electrode to obtain a carbide composition containing a carbide of the second metal; and
a gas generation step including hydrolyzing the carbide of the second metal to obtain gas containing a hydrocarbon.

[12] The method for producing a hydrocarbon according to the above [11], wherein the hydrocarbon is acetylene.
[13] The method for producing a hydrocarbon according to the above [11] or [12], wherein the gas includes acetylene as the hydrocarbon, and further includes at least one selected from the group consisting of ethylene, ethane, methane, methylacetylene, propylene, butene, and hydrogen.
[14] A carbon-containing member including:

a base; and
a metal carbide composition supported on the base, the metal carbide composition containing a carbide of at least one second metal selected from the group consisting of alkali metals and alkali earth metals.

[15] A carbon-containing member including:

a base;
a metal carbide layer covering at least a part of the base and containing a carbide of at least one second metal selected from the group consisting of alkali metals and alkali earth metals; and
a carbon layer covering at least a part of the metal carbide layer, containing carbon, and being substantially free from the second metal carbide.

EFFECTS OF THE INVENTION

The present disclosure can provide a production method in which the reaction rapidly proceeds at a relatively low temperature and which is capable of efficiently obtaining a metal carbide, a method for producing a hydrocarbon from the obtained metal carbide, and a metal carbide-supporting carbon-containing member.

BRIEF DESCRIPTION OF THE DRAWINGS

FIG. 1 is a flow chart of the method for producing a metal carbide according to the present disclosure.
FIG. 2 is a flow chart of the method for producing a hydrocarbon according to the present disclosure.
FIG. 3A is a photograph showing the appearance of the working electrode before the electrolysis step in Example 6-1.
FIG. 3B is a photograph showing the appearance of the working electrode after the electrolysis step in Example 6-1.
FIG. 3C is a photograph of a cross section of a precipitate precipitated on the working electrode after the electrolysis step in Example 6-1.
FIG. 4A is a photograph showing the appearance of the working electrode after the electrolysis step in Example 6-2.
FIG. 4B is an optical microscope photograph obtained by observing a cross section of a precipitate precipitated on the working electrode after the electrolysis step in Example 6-2.
FIG. 4C is a graph showing the results of Raman spectroscopy analysis of the precipitate obtained in Example 6-2.

DESCRIPTION of EMBODIMENTS

First embodiment

In the method for producing a metal carbide of the present embodiment, first, a voltage is applied to a molten salt containing at least one first metal ion selected from the group consisting of alkali metal ions and alkali earth metal ions, and a carbonate ion derived from carbon dioxide to precipitate a first precipitate containing carbon on a first electrode made of SUS304, thereby obtaining a second electrode (electrode preparation step). Then, using the carbon precipitated on the second electrode as a carbon source, a metal carbide is obtained by electrolysis in which the first molten salt used in the electrode preparation step is used as it is (electrolysis step).

Thus, a metal carbide can be efficiently obtained at a relatively low temperature of 800°C or less. Further, $CO_2$, which is said as a cause of global warming, can be effectively utilized as a carbon source. In addition, since the first molten salt used in the electrode preparation step is used as it is in the electrolysis in the subsequent step, that is, the electrode preparation step and the electrolysis step are carried out in the same electrolytic bath, productivity is also high.

The present embodiment includes hydrolyzing the metal carbide obtained by the above method to obtain a hydrocarbon. According to this method, a hydrocarbon with high purity can be efficiently obtained.

The present embodiment includes a metal carbide-supporting carbon-containing member. This carbon-containing member can be utilized in the production of a hydrocarbon.

[Method for producing metal carbide]

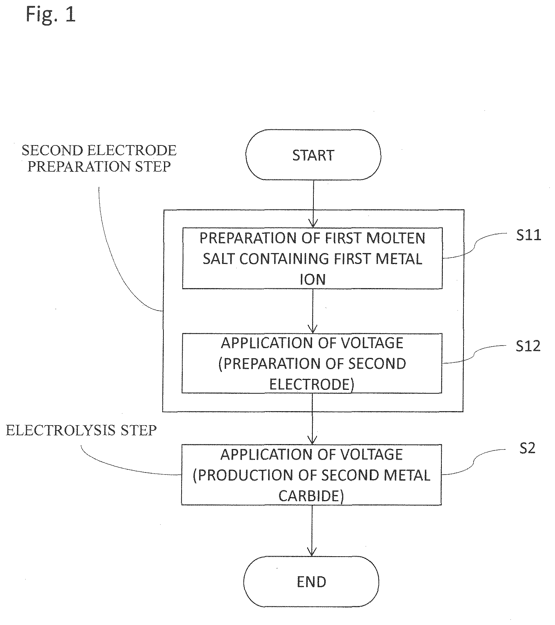

The method for producing a metal carbide according to the present disclosure includes an electrode preparation step including preparing a first molten salt containing at least one first metal ion selected from the group consisting of alkali metal ions and alkali earth metal ions, and a carbonate ion, and applying a voltage to the first molten salt to precipitate a precipitate containing carbon on a first electrode, thereby obtaining a second electrode, and an electrolysis step including applying a voltage to a second molten salt containing at least one second metal ion selected from the group consisting of alkali metal ions and alkali earth metal ions using the second electrode to obtain a carbide composition containing a carbide of the second metal. FIG. 1 is a flow chart of the method for producing a metal carbide according to the present disclosure.

(I) Electrode preparation step

In the electrode preparation step, a precipitate containing carbon is precipitated on the first electrode to produce the second electrode. The carbon on the second electrode is used as the carbon source for producing a metal carbide in the electrolysis step. The precipitate containing carbon is precipitated on the surface of an electrode having a low potential (cathode). Hereinafter, the first electrode is sometimes referred to as the "cathode", and another electrode is sometimes referred to as the "anode".

The electrode preparation step includes preparing a first molten salt containing at least one first metal ion selected from the group consisting of alkali metal ions and alkali earth metal ions, and a carbonate ion, and applying a voltage to the first molten salt to precipitate a first precipitate containing carbon on a first electrode, thereby obtaining a second electrode.

(i) Preparation of first molten salt (S 11)

The first molten salt containing the first metal ion and a carbonate ion derived from carbon dioxide is prepared. The first metal ion is produced by the electrolysis of the salt of the first metal. The carbonate ion is produced by adding gas containing carbon dioxide to an electrolytic bath. In the first molten salt, it is not required that the whole first metal salt and carbon dioxide are ionized. In the present embodiment, for convenience, the salt of the first metal contained in the electrolytic bath is referred to as the first metal salt, also in the case where the salt is completely ionized, and the molten salt prepared from the first metal salt and carbon dioxide is referred to as the first molten salt, also in the case where the molten salt is not completely ionized.

(First metal ion)

The first metal ion is at least one selected from the group consisting of alkali metal ions and alkali earth metal ions. Alkali metal ions and alkali earth metal ions have excellent functions as the electrolyte.

The alkali metal is at least one selected from the group consisting of lithium (Li), sodium (Na), potassium (K), rubidium (Rb), cesium (Cs), and francium (Fr). The alkali metal may be at least one selected from the group consisting of Li, Na, K, Rb, and Cs. In particular, the alkali metal may be at least one selected from the group consisting of Li, Na, K, and Cs.

The alkali earth metal is at least one selected from the group consisting of beryllium (Be), magnesium (Mg), calcium (Ca), strontium (Sr), barium (Ba), and radium (Ra). The alkali earth metal may be at least one selected from the group consisting of Mg, Ca, Sr, and Ba.

(Further metal ion)

The first molten salt may contain a further metal ion (third metal ion) other than the first metal ion. The salt of the third metal ion is preferably ionized at a temperature of 800°C or less.

The third metal is at least one selected from the group consisting of rare-earth elements, aluminum (Al), gallium (Ga), indium (In), thallium (Tl), zinc (Zn), cadmium (Cd), gold (Au), silver (Ag), and copper (Cu). Examples of the rare-earth element include scandium (Sc), yttrium (Y), lanthanoid elements, and actinoid elements.

(Carbonate ion derived from carbon dioxide)

The carbonate ion is produced by adding gas containing carbon dioxide to the electrolytic bath.

Gas containing carbon dioxide (hereinafter, sometimes referred to as $CO_2$ gas) in a gas state is brought into contact with the first metal salt in a liquid state. The $CO_2$ gas may be brown into the gas phase part of the electrolytic bath and brought into contact with the liquid surface of the first metal salt, or the $CO_2$ gas may be brown into the first metal salt. The $CO_2$ gas may be a mixed gas of $CO_2$ and an inert gas (typically, argon). A sufficient amount of the $CO_2$ gas may be added to the first metal salt before application of a voltage, or the $CO_2$ gas may be added to the first metal salt while applying a voltage.

The amount of the $CO_2$ gas blown may be appropriately set depending on the amount of the first metal ion. For example, considering the absorption efficiency of the gas into the first metal salt, the amount of the $CO_2$ gas blown is equivalent to or more than the first metal salt.

From the viewpoint of promoting the dissolution of $CO_2$ into the first metal salt, the diameter of bubbles of the $CO_2$ gas blown is desirably smaller. The diameter of bubbles of the $CO_2$ gas is preferably 10 mm or less, and more preferably 1 mm or less. The diameter of bubbles of the $CO_2$ gas may be 100 nm or more, or 1 $\mu$m or more. The diameter of bubbles of the $CO_2$ gas can be micronized by, for example, bubbling through porous materials made of quartz glass or high purity alumina, stirring with a stirrer, applying vibration, or being irradiated with ultrasonic waves.

The $CO_2$ gas is preferably preheated to the temperature of the first metal salt, in advance. Preheating easily suppresses the reduction in the temperature and solidification of the first metal salt.

(Further anion)

The first molten salt may contain an anion other than carbonate ion. A further anion is, for example, at least one selected from the group consisting of a halide ion, a sulfate ion, a phosphate ion, a nitrate ion, an acetate ion, a carboxylate ion, and an oxide ion ($O^{2-}$). A halide ion derived from a halide of the first metal may be contained as a further anion. The halide of the first metal is generally used as the molten salt, and is excellent as an electrolyte.

(ii) Application of voltage (S12)

Subsequently, a voltage is applied to the first molten salt. This allows $CO_3^{2-}$ to be reduced on the cathode, and the precipitate containing carbon is obtained (Equation 1). The carbon contained in the precipitate may be a polycrystalline body, and may be a polycrystalline body having a high degree of crystallinity (e.g., carbon nanotube-like polycrystalline body). The carbide of the first metal may also be precipitated on the cathode. $O^{2-}$ is oxidized on the anode to generate oxygen (Equation 2).

$$\text{(Equation 1)} \ 2CO_3^{2-} + 8e^- \rightarrow 2C + 6O^{2-}$$

$$\text{(Equation 2)} \ 2O^{2-} \rightarrow O_2 + 4e^-$$

When the first metal is Ca, calcium carbide ($CaC_2$) may be precipitated on the cathode (Equation 3). Metal calcium may be further produced on the cathode (Equation 4). A part or the whole metal lithium produced by this side reaction may be further reacted to be calcium carbide (Equation 5). Alternatively, metal calcium may be reacted with carbon dioxide physically dissolved in the first molten salt to be calcium carbide (Equation 6). Fine carbon powder may be produced, so that the molten salt may be turbid in black, in some cases (Equation 7). CaO produced in the above (Equation 6) and (Equation 7) is immediately dissolved in the molten salt and produces calcium ions and oxide ions (Equation 8).

$$\text{(Equation 3)} \ Ca^{2+} + 2CO_3^{2-} + 10e^- \rightarrow CaC_2 + 6O^{2-}$$

$$\text{(Equation 4)} \ Ca^{2+} + 2e^- \rightarrow Ca$$

$$\text{(Equation 5)} \ Ca + 2C \rightarrow CaC_2$$

$$\text{(Equation 6)} \ 2CO_2 + 5Ca \rightarrow CaC_2 + 4CaO$$

$$\text{(Equation 7)} \ 2Ca + CO_2 \rightarrow C + 2CaO$$

$$\text{(Equation 8)} \ CaO \rightarrow Ca^{2+} + O^{2-}$$

When the first metal is Na, K, or Li, sodium carbide ($Na_2C_2$), potassium carbide ($K_2C_2$), or lithium carbide ($LiC_2$) is precipitated together with carbon by the same reaction. The same applies to other first metals.

$O^{2-}$ is oxidized to generate oxygen on the anode. The oxygen generated on the anode is discharged into the gas phase. This oxygen gas can be recovered and utilized in other applications.

The application of a voltage is carried out at a temperature at which the molten state of the first molten salt can be maintained. The temperature of the electrolytic bath may be, for example, 350°C or more, or 400°C or more. The temperature of the electrolytic bath may be, for example, 800°C or less, or 700°C or less. According to the present disclosure, the reaction proceeds at such a relatively low temperature, so that the energy efficiency is high.

The applied voltage is set so that the first electrode (cathode) potential can be equal to or lower than the potential (Ec) at which carbon is precipitated. The current value is only required to be appropriately set depending on the amount of

$CO_2$ to be supplied per unit time. For example, the current value is set so that $CO_3^{2-}$ produced by the reaction of $CO_2$ with $O_2^-$ in the first molten salt is larger than $CO_3^{2-}$ consumed at the cathode per unit time to prevent the $CO_3^{2-}$ concentration in the first molten salt from decreasing.

In the present embodiment, a cathode formed from SUS304 is used. Accordingly, the faradaic efficiency is significantly improved. In addition, SUS304 is desirable since it is relatively easily available, low in cost, and further excellent in thermal resistance. SUS304 is austenite stainless steel, and its component is described in JIS G 4303 and the like.

The material of the cathode is not limited to SUS304. Examples of the material of the cathode include metals such as Ag, Cu, Ni, Pb, Hg, Tl, Bi, In, Sn, Cd, Au, Zn, Ga, Ge, Fe, Pt, Pd, Ru, Ti, Cr, Mo, W, V, Nb, Ta, Zr, and alloys thereof. Specific examples of the alloy include ferritic stainless steel such as SUS430.

Above all, from the viewpoint of faradaic efficiency, the cathode may contain at least one selected from the group consisting of a transition metal and an alloy containing a transition metal. The transition metal may be Ni, Fe, Mo, or Ti. In particular, the cathode may contain an alloy of iron (typically, stainless steel), or may be formed from an alloy of iron. The cathode may contain SUS304, or may be formed from SUS304.

The material of the anode is not limited. Examples of the material of the anode include Pt, a conductive metal oxide, glassy carbon, natural graphite, isotropic carbon, pyrolytic graphite, plastic formed carbon, and boron-doped diamond. Examples of the electrode made of a conductive metal oxide include a transparent conductive electrode referred to as ITO electrode in which a film of a mixed oxide of indium and tin is formed on glass, an electrode referred to as DSA electrode (trademark of De Nora Permelec Ltd.) in which a film of an oxide of a platinum metal such as ruthenium or iridium is formed on a substrate such as titanium, and a conductive metal oxide electrode having a composition such as $La_{1-x}Sr_xFeO_{3-\delta}$ ($0 \leq x \leq 0.5$ (in particular, $0.1 \leq x \leq 0.5$), $0 \leq \delta \leq 0.5$). Above all, a conductive metal oxide-based anode is preferable, from the viewpoint that wear due to the oxidation reaction hardly occurs.

Through the electrode preparation step, the second electrode on which the precipitate containing carbon is supported is obtained.

(II) Electrolysis step (S2)

In the electrolysis step, electrolysis of the second molten salt containing at least one second metal ion selected from the group consisting of alkali metal ions and alkali earth metal ions is carried out using the second electrode obtained in the electrode preparation step. Consequently, a carbide composition containing a carbide of the second metal is obtained using the carbon supported on the second electrode as the carbon source.

(Second metal ion)

The second metal ion is at least one selected from the group consisting of alkali metal ions and alkali earth metal ions. The second metal ion is the metal source of the target metal carbide. Carbides of alkali metal and alkali earth metal, as are also referred to as acetylides, easily produce acetylene by hydrolysis and have a high industrial value. In addition, alkali metal ions and alkali earth metal ions have excellent functions as the electrolyte, as described above.

In terms of industrial value, the second metal ion may contain an alkali earth metal ion, and may contain Ca ion. The second metal ion may contain both an alkali earth metal ion and an alkali metal ion. This is because the alkali metal ion has excellent functions as an electrolyte such that it allows the alkaline earth metal salt to be easily ionized and promotes the production of the alkali earth metal ion, reduces the melting point of the molten salt, and enables electrolysis to be performed at a further low temperature. The first metal ion may contain at least one selected from the group consisting of Li, Na, K, Rb, and Cs ions as the alkali metal ion, and at least one selected from the group consisting of Be, Mg, Ca, Sr, and Ba ions as the alkali earth metal ion. In particular, at least one of Li, Na, and K ions, and Ca ion may be contained.

The amount of the second metal ion contained in the second molten salt is not limited. Since the second metal ion is the metal source of the target metal carbide, it is desirably contained in a sufficient amount. The number of moles of the second metal ion may be 1 mol% or more, 2 mol% or more, or 3 mol% or more, based on the total number of moles of the cation in the electrolytic bath. The number of moles of the second metal ion may be 20 mol% or less, 15 mol% or less, or 10 mol% or less, based on the total number of moles of the cation in the electrolytic bath. In an aspect, the number of moles of the second metal ion is 1 mol% or more and 20 mol% or less, based on the total number of moles of the cation in the electrolytic bath.

When the first molten salt used in the electrode preparation step is used as it is as the second molten salt, as the present embodiment, the second metal ion may be further added to the electrolytic bath before the electrolysis step.

(Anion)

The counter ion (anion) of the second metal ion is at least one selected from the group consisting of a halide ion, a sulfate ion, a phosphate ion, a nitrate ion, an acetate ion, a carboxylate ion, and an oxide ion ($O^{2-}$).

The second molten salt may contain at least one of a halide ion and an oxide ion as the anion. Above all, the second molten salt may contain both the halide ion and the oxide ion. While the oxide of the second metal is easily available, the melting temperature thereof tends to be high. The halide of the second metal is used as the molten salt, in general. However, halogen gas having high oxidation power (that may cause corrosion) may be produced by the halide ion at the anode. When both the halide ion and the oxide ion are contained, the melting temperature of the molten salt can be reduced while suppressing the generation of halogen gas.

Halogen is at least one selected from the group consisting of fluorine (F), chlorine (Cl), bromine (Br), iodine (I), and astatine (At). Halogen may be at least one selected from the group consisting of F, Cl, Br, and I, and in particular, F and/or Cl.

The second molten salt is desirably substantially free from carbonate ions ($CO_3^{2-}$). When the second molten salt contains carbonate ions, the carbonate ions react with electrons produced by the discharge of the second metal (Equation 7), so that carbon is easily produced. Accordingly, the yield of the second metal carbide is reduced. The second molten salt substantially free from carbonate ions suppresses such a side reaction, leading to an increase in the yield of the second metal carbide.

$$\text{(Equation 7) } 2CO_3^{2-} + 8e^- \rightarrow 2C + 6O^{2-}$$

The term "substantially free from carbonate ions" permits the presence of carbonate ions to such an extent that carbonate ions are not involved in the electrolysis reaction. The second molten salt may contain, for example, about 1.0 mol% or less of carbonate ions. The carbonate ion concentration in the second molten salt may be 0.5 mol% or less, 0.3 mol% or less, or 0 mol%.

Specific examples of the second metal salt containing an alkali earth metal ion include $CaO$, $CaCl_2$, $CaF_2$, $CaBr_2$, $CaI_2$, $CaH_2$, and $Ca_3P_2$. Specific examples of the second metal salt containing an alkali metal ion include $LiF$, $NaF$, $KF$, $RbF$, $CsF$, $LiCl$, $NaCl$, $KCl$, $RbCl$, $CsCl$, $LiBr$, $NaBr$, $KBr$, $RbBr$, $CsBr$, $LiI$, $NaI$, $KI$, $RbI$, and $CsI$.

The second metal ion may be the same with or different from the first metal ion. The first metal ion and the second metal ion may be the same. In the present embodiment, since the first molten salt used in the electrode preparation step is used as it is as the second molten salt in the electrolysis step, the second metal ion may contain the same kind of metal ion as the first metal ion.

The material of the another electrode (anode) is not limited. Examples of the material of the anode include the same as those used in the electrode preparation step. In the present embodiment, the anode used in the electrode preparation step may also be used as it is in the electrolysis step.

When a voltage is applied to the second molten salt, the second metal ion is reduced on the carbon constituting the cathode (the second electrode), so that the second metal is produced. The produced second metal immediately reacts with the carbon constituting the cathode (the second electrode), thereby obtaining a composition containing the second metal carbide (metal carbide composition). When the second metal salt that has not been ionized is present in the second molten salt, ionization of the second metal salt may be promoted by the application of a voltage.

When the second metal is Ca, calcium carbide ($CaC_2$) is produced (Equation 8). On the cathode, metal calcium may be further produced by a side reaction (Equation 9). A part or the whole metal calcium produced by this side reaction may further react to be calcium carbide.

$$\text{(Equation 8) } Ca^{2+} + 2C + 2e^- \rightarrow CaC_2$$

$$\text{(Equation 9) } Ca^{2+} + 2e^- \rightarrow Ca$$

The application of a voltage is carried out at a temperature at which the molten state of the molten salt can be maintained. The temperature of the electrolytic bath may be, for example, 350°C or more, or 400°C or more. The temperature of the electrolytic bath may be, for example, 800°C or less, or 700°C or less. According to the present disclosure, the reaction proceeds at such a relatively low temperature, so that the energy efficiency is high.

The applied voltage is set so that the cathode potential can be a potential lower than the potential (Emc) at which the second metal is precipitated on the cathode. Accordingly, the selectivity of the second metal carbide may be further improved. When the potential of the cathode is excessively high, the amount of the target second metal carbide produced is easily reduced. When the potential of the cathode is excessively low, a metal having the highest oxidation reduction potential in the molten salt is precipitated among metals contained in the molten salt, while the second metal carbide is produced. When a plurality of metals each having a similar oxidation reduction potential in the molten salt is present in the molten salt, an alloy of a plurality of metals may be precipitated. The potential Emc can be determined using a metal electrode to be used, for example, an SUS304 electrode buy carrying out cyclic voltammetry measurement in the molten salt.

The set current value when constant current electrolysis is carried out may be appropriately set so that the cathode potential during electrolysis can be the above-described potential range.

The metal carbide composition is usually supported on the cathode (strictly, a base derived from the first (second) electrode used as the cathode). When a molten salt excellent in the solubility of the second metal carbide is used, the second metal carbide is dissolved in the molten salt in a part or the whole thereof. When the second metal carbide is dissolved in the molten salt in advance, the second metal carbide obtained by electrolysis is easily precipitated on the cathode, and is easily supported on a base derived from the first electrode.

The metal carbide composition contains a carbide of the second metal. The second metal carbide is the main component of the metal carbide composition. The main component refers to a component that accounts for 50% by mass or more of the total mass of the metal carbide composition. The content of the second metal carbide may be 80% by mass or more, or 90% by mass or more of the mass of the metal carbide composition. The content of the second metal carbide may be 99.9% by mass or less, or 99% by mass or less of the mass of the metal carbide composition. In an aspect, the content of the second metal carbide is 80% by mass or more and 99.9% by mass or less of the mass of the metal carbide composition.

The metal carbide composition may contain at least one selected from the group consisting of carbon; a simple substance, a halide, a carbonate, an oxide, a hydride, and a peroxide of said at least one second metal as the byproduct. The metal carbide composition may further contain at least one selected from the group consisting of a simple substance, a halide, a carbonate, an oxide, and a carbide of said at least one first metal.

The metal carbide composition may further contain at least one selected from the group consisting of a solidified electrolyte (another metal salt), a halide of a material constituting the apparatus, an oxide, a metal, and a hydrate thereof.

The carbon contained in the metal carbide composition is, for example, at least one selected from the group consisting of nanocarbon materials such as graphite, amorphous carbon, glassy carbon, carbon nanotubes, diamond, nanodiamond, and graphene. By subsequently carrying out the electrolysis by the above method, the second metal carbide can be further obtained from the carbon contained in the metal carbide composition. In this case, the yield is further increased.

The presence confirmation and the quantitative determination of the second metal carbide, the simple substance of the second metal, the compound containing the second metal, and other byproducts can be carried out by, for example, Raman spectroscopy and X-Ray diffraction (XRD) analysis of the composition.

[Carbon-containing member]

The present disclosure includes a carbon-containing member including a base, and a metal carbide composition supported on the base, the metal carbide composition containing a carbide of at least one second metal selected from the group consisting of alkali metals and alkali earth metals. The carbon-containing member according to the present disclosure can be utilized in the production of a hydrocarbon.

The carbon-containing member is obtained by, for example, the above method for producing a metal carbide. That is, the carbon-containing member may correspond to the second electrode used in the electrolysis of the above second molten salt. In this case, the base is derived from the above second electrode.

The metal carbide composition is only required to be supported on at least a part of the surface of the base. The surface of the base typically corresponds to the part that has been in contact with the second metal ion of the second electrode. The term supported includes a state in which at least a part of the surface of the base is coated with the metal carbide composition.

When a cross section passing through the center (or center of gravity) of the carbon-containing member is subjected to elemental analysis with an energy dispersive X-ray analysis (EDX), the second metal and carbon are detected on the cross section. Since the base (second electrode) usually contains no second metal, it can be said that the detection of the second metal and carbon indicates the presence of the second metal carbide.

[Method for producing hydrocarbon]

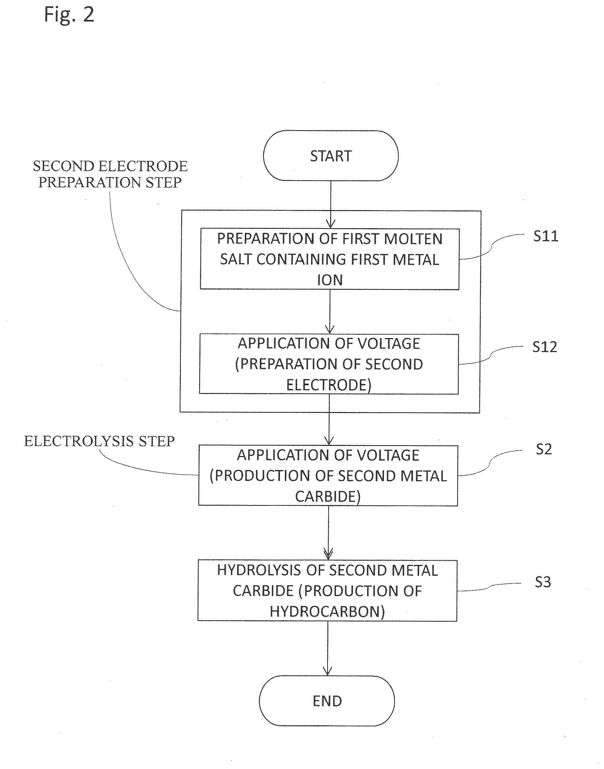

The present disclosure includes a method for producing a hydrocarbon from the second metal carbide. That is, the method for producing a hydrocarbon according to the present disclosure includes the above electrode preparation step and electrolysis step, and hydrolyzing the carbide of the second metal to obtain gas containing a hydrocarbon. Fig. 2 is a flow chart of the method for producing a hydrocarbon according to the present disclosure.

(1) Electrode preparation step (S11, S12)

The second electrode is prepared in the same manner as in the electrode preparation step (S11 and S12) in the above method for producing a metal carbide.

(2) Electrolysis step (S2)

A voltage is applied to the second molten salt in the same manner as in electrolysis step in the above method for producing a metal carbide. Consequently, a composition containing the second metal carbide is obtained.

(3) Hydrolysis of metal carbide (S3)

Then, the second metal carbide is brought into contact with water and hydrolyzed. Consequently, gas containing the target hydrocarbon is obtained. According to the present disclosure, the faradaic efficiency e with respect to hydrocarbon production is improved. Usually, a hydrocarbon has a low solubility in water. Thus, the produced hydrocarbon is rapidly discharged into the gas phase and recovered.

The second metal carbide may be isolated from the carbide composition of a metal and hydrolyzed. Isolation is conducted by, for example, a method in which the carbide composition of a metal is pulverized and a difference in specific gravity is utilized. Alternatively, the carbide composition of a metal may be hydrolyzed as it is. For example, the electrode on which the metal carbide composition is precipitated (it may be the "carbon-containing member" according to the present disclosure) is brought into contact with water as it is.

Examples of the hydrocarbon to be obtained include methane, ethane, ethylene, acetylene ($C_2H_2$), methylacetylene, propane, propylene, butane, and butene. In the case where the isolated first metal carbide is used or the amount of byproducts (in particular, a simple substance of metal) contained in the composition is small, acetylene is obtained as the main component. The main component refers to a component that accounts for 50% by mass or more of the total mass of the recovered gas. Acetylene is an industrially important hydrocarbon.

The gas to be obtained may contain water vapor, hydrogen, nitrogen, and oxygen as byproducts, in addition to the hydrocarbon. The amount of byproducts is preferably 10% by mass or less, and more preferably 1% by mass or less of the recovered gas. The amount of byproducts may be 0.0001% by mass or more, or 0.001% by mass or more of the recovered gas. In an aspect, the amount of byproducts is 0.0001% by mass or more and 1 % by mass or less of the recovered gas.

The gas to be obtained may contain acetylene as the hydrocarbon, and may further contain at least one selected from the group consisting of ethylene, ethane, methane, methylacetylene, propylene, butene, and hydrogen.

The presence confirmation and the quantitative determination of the hydrocarbon and byproducts can be carried out by, for example, gas chromatograph mass spectrometry (GC-MS analysis), Fourier transform infrared spectroscopy (FT-IR analysis) with gas cells, or ultraviolet-visible absorption spectroscopy (UV-Vis analysis) of the recovered gas.

The amount of water to be brought into contact with the composition is appropriately set depending on the mass of the composition. The above amount of water is, for example, more than the amount required for the hydrolysis of the metal carbide and metal contained in the composition. In addition, an amount of water that enables the entire composition to be immersed and takes the evaporation due to the heat generated upon hydrolysis into consideration is desirably used.

The hydrolysis of the second metal carbide produces the hydroxide of the second metal together with the hydrocarbon. For example, the hydrolysis of calcium carbide produces calcium hydroxide together with acetylene (Equation 10).

$$\text{(Equation 10)} \quad CaC_2 + 2H_2O \rightarrow C_2H_2 + Ca(OH)_2$$

Second embodiment

The present embodiment is different from the first embodiment in that the electrolytic bath used was changed in the electrode preparation step and the electrolysis step. The difference will be described below. In the present embodiment, the method for producing a metal carbide and other constitution are the same as those of the first embodiment, and thus, the description thereof is omitted. In the present embodiment, the method for producing a hydrocarbon and the constitution of the carbon-containing member are the same as those of the first embodiment, and thus, the description thereof is omitted.

In the present embodiment, a second molten salt separately prepared from the first molten salt used in the electrode preparation step is used in the electrolysis step. Carbonate ions as the carbon source may be remained in the first molten salt used in the electrode preparation step. In the present embodiment, since the second molten salt substantially free from carbonate ions can be prepared, side reactions are suppressed, and the yield and faradaic efficiency of the second metal carbide may be further improved.

Third embodiment

In the present embodiment, the material of the first electrode is different from that of the first embodiment. The difference will be described below. In the present embodiment, the method for producing a metal carbide and other constitution are the same as those of the first embodiment, and thus, the description thereof is omitted. In the present embodiment, the method for producing a hydrocarbon and the constitution of the carbon-containing member are the same as those of the first embodiment, and thus, the description thereof is omitted.

In the present embodiment, a Fe plate is used as the first electrode. In this case, a carbon-containing member including a base, a metal carbide layer covering at least a part of the base and containing a carbide of at least one second metal selected from the group consisting of alkali metals and alkali earth metals, and a carbon layer covering at least a part of the metal carbide layer, containing carbon, and being substantially free from the second metal carbide may be formed. Such a carbon-containing member can suppress the decomposition of the carbide even when being stored in an atmosphere containing moisture. The presence or absence of the second metal carbide can be confirmed by, for example, Raman spectroscopy.

The term "substantially free from the second metal carbide" permits the presence of the second metal carbide to such an extent that it does not contribute to the generation of hydrocarbon. The carbon layer may contain, for example, about 10,000 ppm or less of the second metal carbide. The second metal carbide concentration in the carbon layer may be 1,000 ppm or less, 500 ppm or less, or 0 ppm.

Hereinabove, the embodiments of the present disclosure have been described in detail, but the present disclosure is not limited to these, and its design can be modified within a range not departing from the gist of the present disclosure.

In the above embodiments, carbon dioxide is used as the carbonate ion source, but the carbonate ion source is not limited thereto. The carbonate ion source may be a carbonate of an arbitrary metal. When the carbonate of the first metal is used, the first metal ion and carbonate ions are generated by ionization. The carbonate of the first metal can be synthesized by, for example, reacting the hydroxide of the first metal with carbon dioxide.

In the above embodiment, an electrode composed of SUS304 or Fe is used as the first electrode (cathode), but the electrode is not limited thereto. The first electrode may contain other metal materials, and may be formed of a carbon material. The first electrode may contain a carbon material such as glassy carbon, natural graphite, isotropic carbon, pyrolytic graphite, plastic formed carbon, and conductive diamond, and may be formed of a carbon material.

In the first embodiment, the carbon-containing member to be obtained includes a base, and a metal carbide composition containing the carbide of the second metal supported on the base, but is not limited thereto. The carbon-containing member to be obtained by the method shown in the first embodiment may include a base, a metal carbide layer, and a carbon layer.

In the third embodiment, the carbon-containing member to be obtained includes a base, a metal carbide layer, and a carbon layer, but is not limited thereto. The carbon-containing member obtained by the method shown in the third embodiment may include a base, and a metal carbide composition containing the carbide of the second metal supported on the base.

Examples

Hereinafter, the present invention will be more specifically described with reference to Examples, but the present invention is not limited thereto.

[Example 1-1]

(1) Electrode preparation step

3.0 mol% of CaO with respect to LiCl, KCl, and $CaCl_2$ (LiCl/KCl/$CaCl_2$ = 52.3 mol%/11.6 mol%/36.1 mol%) having an eutectic composition was mixed thereinto, (that is, LiCl/KCl/$CaCl_2$/CaO = 50.8 mol%/11.3 mol%/35.0 mol%/2.9 mol%), and the mixture was dried in vacuum at 200°C and 100 Pa or less for 24 hours or more. This mixed salt was put in a container made of quartz, set in an electric furnace, and heated to 450°C. Thus, a molten salt of LiCl-KCl-$CaCl_2$-CaO was obtained.

Then, a working electrode (1.0 cm $\times$ 1.0 cm, SUS304), a counter electrode (platinum coil), and a reference electrode ($Ag^+$/Ag) were attached to the lid of the above container, and the container was sealed with this lid. $CO_2$ was blown into the molten salt at 450°C in the container at a flow rate of 100 mL/min for 30 minutes or more. Subsequently, a voltage was applied for 30 minutes while maintaining the potential of the working electrode relative to the reference electrode at 0.9 V using a potentio-galvanostat. A precipitate was confirmed to be precipitated on the working electrode. All the experimental operations were carried out in a glove box in which a high purity argon atmosphere was maintained.

(2) Electrolysis step

Subsequently, electrolysis was carried out by using the same electrolytic bath and electrodes. Specifically, a voltage was applied for 30 minutes while maintaining the potential of the working electrode relative to the reference electrode at 0.3 V using a potentio-galvanostat. A precipitate was confirmed to be precipitated on the working electrode. All the experimental operations were carried out in a glove box in which a high purity argon atmosphere was maintained. The potential of the working electrode is a value obtained by measuring the potential between the reference electrode ($Ag^+$/Ag) and the cathode, and calibrating the measured value based on the Li-Ca alloy precipitation potential.

(3) Preparation of hydrocarbon

The precipitate was put in a sealed test tube. Pure water was added to the test tube in small portions at ambient temperature (23°C), and the precipitate was hydrolyzed. The total amount of the water added was 2.5 ml. After bubbling was confirmed to be generated in the test tube, the test tube was allowed to stand until no bubbling was observed. Subsequently, 100 $\mu$l (microliter) of the gas in the test tube was collected using a gas tight syringe.

The obtained gas was subjected to GC-MS analysis using a gas chromatograph (GC) apparatus, and the production of $C_2H_2$ as the main component was confirmed. Further, methane, ethane, and hydrogen were confirmed to be produced as byproducts. In addition, water, carbon dioxide, nitrogen, oxygen, and argon were contained. The amount of each component produced was also confirmed. The mass proportion of $C_2H_2$ in the recovered gas was sufficiently larger than 50% by mass.

With respect to $C_2H_2$ gas production, the faradaic efficiency through the electrode preparation step and the electrolysis step was calculated to be about 2.2%. The precipitate is understood to contain $CaC_2$ as the main component because $C_2H_2$ gas was produced. It can be said that the higher the faradaic efficiency with respect to hydrocarbon gas production is, the higher the faradaic efficiency with respect to metal carbide production is.

[Example 1-2]

Electrolysis and hydrolysis were carried out in the same manner as in Example 1-1, except that the potential of the working electrode with respect to the reference electrode was maintained at 0.6 V in the electrode preparation step and at 0.1 V in the electrolysis step.

A precipitate was confirmed to be precipitated on the working electrode.

With respect to $C_2H_2$ gas production, the faradaic efficiency through the electrode preparation step and the electrolysis step was calculated to be about 9.1%. The precipitate precipitated on the working electrode by the electrolysis step is understood to contain $CaC_2$ as the main component because $C_2H_2$ gas was produced.

[Table 1]

[Table 1]
Molten salt: LiCl-KCl-CuCl2-CaO
Electrode preparation step and electrolysis step were conducted in the same bath.
Working electrode: SUS304

| Example | Temperature /°C | Electrode preparation step | | | | Electrolysis step | | | | Faradaic efficiency /% |
|---|---|---|---|---|---|---|---|---|---|---|
| | | Carbon source | Potential /V | Electrolysis time /min | Quantity of electricity /C | Atmosphere | Potential /V | Electrolysis time /min | Quantity of electricity /C | |
| 1-1 | 450 | CO2 | 0.9 | 30 | 105.54 | Ar | 0.3 | 30 | 105.54 | 2.2 |
| 1-2 | | | 0.6 | | 105.95 | | 0.1 | | 105.95 | 9.1 |

[Example 2-1]

The potential of the working electrode with respect to the reference electrode was maintained at 0.3 V in the electrode preparation step and at 0.1 V in the electrolysis step. In addition, in the electrolysis step, an electrolytic bath separately prepared was used without changing the electrode. Except for that, electrolysis and hydrolysis were carried out in the same manner as in Example 1-1. The electrolytic bath used in the electrolysis step was prepared in the same manner as in Example 1-1.

A precipitate was confirmed to be precipitated on the working electrode.

With respect to $C_2H_2$ gas production, the faradaic efficiency through the electrode preparation step and the electrolysis step was calculated to be about 21.5%. The precipitate precipitated on the working electrode by the electrolysis step is understood to contain $CaC_2$ as the main component because $C_2H_2$ gas was produced.

[Example 2-2]

Electrolysis and hydrolysis were carried out in the same manner as in Example 2-1, except that the potential of the working electrode with respect to the reference electrode was maintained at 0.1 V in the electrode preparation step and at 0.1 V in the electrolysis step.

A precipitate was confirmed to be precipitated on the working electrode.

With respect to $C_2H_2$ gas production, the faradaic efficiency through the electrode preparation step and the electrolysis step was calculated to be about 34.6%. The precipitate precipitated on the working electrode by the electrolysis step is understood to contain $CaC_2$ as the main component because $C_2H_2$ gas was produced.

[Table 2]

EP 4 484 614 A1

[Table 2]

Molten salt: LiCl-KCl-CaCl2-CaO

Electrode preparation step and electrolysis step were conducted by changing the bath.

Working electrode: SUS304

| Example | Temperature /°C | Electrode preparation step | | | | Electrolysis step | | | | faradaic efficiency /% |
|---|---|---|---|---|---|---|---|---|---|---|
| | | Carbon source | Potential /V | Electrolysis time /min | Quantity of electricity /C | Atmosphere | Potential | Electrolysis time /min | Quantity of electricity /C | |
| 2-1 | 450 | CO2 | 0.3 | 30 | 119.17 | Ar | 0.1 | 30 | 7.82 | 21.5 |
| 2-2 | | | 0.1 | | 136.86 | | 0.1 | | 11.81 | 34.6 |

16

[Example 3-1]

The potential of the working electrode with respect to the reference electrode was maintained at 0.3 V in the electrode preparation step and the electrolysis step. In addition, the electrolysis step was carried out in a $CO_2$ atmosphere. Except for that, electrolysis and hydrolysis were carried out in the same manner as in Example 1-1.

A precipitate was confirmed to be precipitated on the working electrode.

With respect to $C_2H_2$ gas production, the faradaic efficiency through the electrode preparation step and the electrolysis step was calculated to be about 8.4%. The precipitate precipitated on the working electrode by the electrolysis step is understood to contain $CaC_2$ as the main component because $C_2H_2$ gas was produced.

[Example 3-2]

Electrolysis and hydrolysis were carried out in the same manner as in Example 3-1, except that the potential of the working electrode with respect to the reference electrode was maintained at 0.1 V in the electrode preparation step and the electrolysis step.

A precipitate was confirmed to be precipitated on the working electrode.

With respect to $C_2H_2$ gas production, the faradaic efficiency through the electrode preparation step and the electrolysis step was calculated to be about 10.3%. The precipitate precipitated on the working electrode by the electrolysis step is understood to contain $CaC_2$ as the main component because $C_2H_2$ gas was produced.

[Table 3]

[Table 3]
Molten salt: LiCl-KCl-CaCl2-CaO
Electrode preparation step and electrolysis step were subsequently conducted in the same bath.
Working electrode: SUS304

| Example | Temperature /°C | Electrode preparation step | | | | Electrolysis step | | | | Faradaic efficiency /% |
|---|---|---|---|---|---|---|---|---|---|---|
| | | Carbon source | Potential /V | Electrolysis time /min | Quantity of electricity /C | Atmosphere | Potential /V | Electrolysis time /min | Quantity of electricity /C | |
| 3-1 | 450 | CO2 | 0.3 | 30 | 105.54 | CO2 | 0.1 | 30 | 105.54 | 8.4 |
| 3-2 | | | 0.1 | | 105.95 | | 0.1 | | 105.95 | 10.3 |

[Example 4-1]

The potential of the working electrode with respect to the reference electrode was maintained at 0.3 V in the electrode preparation step and at 0.1 V in the electrolysis step. In addition, electrolysis and hydrolysis were carried out in the same manner as in Example 3-1, except that, after the electrode preparation step, electrolysis step was carried out by taking out the electrode once from the electrolytic bath and putting the electrode again in the same bath 30 minutes later.
A precipitate was confirmed to be precipitated on the working electrode.
With respect to $C_2H_2$ gas production, the faradaic efficiency through the electrode preparation step and the electrolysis step was calculated to be about 4.5%. The precipitate precipitated on the working electrode by the electrolysis step is understood to contain $CaC_2$ as the main component because $C_2H_2$ gas was produced.

[Example 4-2]

Electrolysis and hydrolysis were carried out in the same manner as in Example 4-1, except that the potential of the working electrode with respect to the reference electrode was maintained at 0.1 V in the electrode preparation step and the electrolysis step.
A precipitate was confirmed to be precipitated on the working electrode.
With respect to $C_2H_2$ gas production, the faradaic efficiency through the electrode preparation step and the electrolysis step was calculated to be about 2.8%. The precipitate precipitated on the working electrode by the electrolysis step is understood to contain $CaC_2$ as the main component because $C_2H_2$ gas was produced.

[Table 4]

[Table 4]

Molten salt: LiCl-KCl-CaCl2-CaO

After electrode preparation step, the electrode was once taken out from the bath, and 30 rnin later, electrolysis step was conducted by putting the electrode in the same both again.

Working electrode: SUS304

| Example | Temperature /°C | Electrode preparation step | | | | Electrolysis step | | | | Faradaic efficiency /% |
|---|---|---|---|---|---|---|---|---|---|---|
| | | Carbon source | Potential IV | Electrolysis time /min | Quantity of electricity /C | Atmosphere | Potential IV | Electrolysis time /min | Quantity of electricity /C | |
| 4-1 | 450 | CO2 | 0.3 | 30 | 119.17 | CO2 | 0.1 | 30 | 7.82 | 4.5 |
| 4-2 | | | 0.1 | | 136.86 | | 0.1 | | 11.81 | 2.8 |

[Examples 5-1 to 5-49]

Electrode preparation step and hydrolysis were carried out in the same manner as in Example 1-1, except that the composition of the molten salt, the material of the cathode, and the electrolysis conditions were changed as shown in Table 5 and Table 6.

In Examples 5-23 to 5-49, the potential of the working electrode is a value obtained by measuring the potential between the reference electrode ($Ag^+/Ag$) and the cathode and calibrating the measured value based on the Na-K-Ca alloy precipitation potential. In Examples 5-31 to 5-49, 7.0 mol% of $CaC_2$ with respect to the molten salt was added to the molten salt in advance.

A precipitate was confirmed to be precipitated on the working electrode. Hydrolysis was carried out on the precipitate precipitated on the working electrode (corresponding to the second electrode) prepared in the electrode preparation step. The faradaic efficiency in Tables is a numerical value for the $C_2H_2$ gas production by the precipitate precipitated in the electrode preparation step. It is indicated that the larger the faradaic efficiency is, the larger the amount of $CaC_2$ precipitated in the electrode preparation step is. It can be said that the larger the faradaic efficiency with respect to the $C_2H_2$ gas production in the electrode preparation step is, the larger the faradaic efficiency with respect to the $C_2H_2$ gas production through the electrode preparation step and the electrolysis step is. The precipitate precipitated on the working electrode by the electrolysis step is understood to contain $CaC_2$ as the main component because $C_2H_2$ gas was produced.

[Table 5]

[Table 5]

| Example | Molten salt | Electrode | Additive | Temperature /°C | Electrolysis system | Potential /V | Current density /mAcm-2 | Electrolysis time /min | Electrolysis time /sec | Integrated quantity of electricity /C | Faradaic efficiency /% |
|---|---|---|---|---|---|---|---|---|---|---|---|
| 5-1 | LiCl-KCl-CaCl2-CaO | SUS304 | - | 450 | Constant potential | 0.3 | | 30 | | 110.1 | 5.8 |
| 5-2 | | | | | | 0.1 | | 30 | | 123.4 | 11 |
| 5-3 | | | | 500 | Constant current | | -100 | | 500 | 100 | 5.9 |
| 5-4 | | | | | | | -200 | | 250 | 100 | 3.5 |
| 5-5 | | | | 550 | Constant current | | -100 | | 500 | 100 | 0.4 |
| 5-6 | | | | | | | -200 | | 250 | 100 | 1.4 |
| 5-7 | | Ni | - | 450 | Constant current | | -50 | | | 100 | 0.1 |
| 5-8 | | Fe | - | | Constant current | | -50 | | | 100 | 7.9 |
| 5-9 | | SUS316 | - | | Constant potential | 0.3 | | 30 | | 128.99 | 2.3 |
| 5-10 | | | | | | 0.1 | | 30 | | 143.83 | 5.3 |
| 5-11 | | Mo | - | | Constant potential | 0.3 | | 30 | | 70.3 | 2.2 |
| 5-12 | | | | | | 0.1 | | 30 | | 164.1 | 6.3 |
| 5-13 | | | | | Constant current | | -100 | | 500 | 100 | 6.8 |
| 5-14 | | | | | | | -200 | | 250 | 100 | 4.6 |
| 5-15 | | Ti | - | | Constant potential | 0.3 | | 30 | | 98.69 | 3.3 |
| 5-16 | | | | | | 0.1 | | 30 | | 139.77 | 7.6 |
| 5-17 | | | | | Constant current | | -100 | | 500 | 100 | 4.3 |
| 5-18 | | | | | | | -200 | | 250 | 100 | 2.2 |
| 5-19 | | Ta | - | | Constant potential | 0.3 | | 30 | | 137.49 | 2.3 |
| 5-20 | | | | | | 0.1 | | 30 | | 59.42 | 3.7 |
| 5-21 | | | | | Constant current | | -100 | | 500 | 100 | 4.2 |
| 5-22 | | | | | | | -200 | | 250 | 100 | 1.9 |

[Table 6]

| Example | Molten salt | Electrode | Additive | Temperature /°C | Electrolysis system | Potential /V | Current density /mAcm-2 | Electrolysis time /min | Electrolysis time /sec | Integrated quantity of electricity /C | Faradaic efficiency /% |
|---|---|---|---|---|---|---|---|---|---|---|---|
| 5-23 | NaCl-KCl-CaCl2-CaO | SUS304 | - | 550 | Constant potential | 0.3 | | 30 | | 188.51 | 0.2 |
| 5-24 | | | | | | 0.1 | | 30 | | 208.32 | 0.7 |
| 5-25 | | | | | Constant current | | -100 | | 500 | 100 | 0.9 |
| 5-26 | | | | | | | -200 | | 250 | 100 | 7.5 |
| 5-27 | | Fe | - | | Constant current | | -100 | | 500 | 100 | 25 |
| 5-28 | | | | | | | -200 | | 250 | 100 | 34 |
| 5-29 | | | | | | | -300 | | 167 | 100 | 22 |
| 5-30 | | | | | | | -400 | | 125 | 100 | 8 |
| 5-31 | | SUS304 | CaC2 | | Constant potential | 0.3 | | 30 | | 46.2 | 24.6 |
| 5-32 | | | | | | 0.1 | | 30 | | 75.08 | 0.1 |
| 5-33 | | | | | | -0.2 | | 30 | | 253.39 | 4.2 |
| 5-34 | | | | | Constant current | | -100 | | 500 | 100 | 5 |
| 5-35 | | | | | | | -200 | | 250 | 100 | 14.5 |
| 5-36 | | Ti | | | Constant current | 0.6 | | 30 | | 45.21 | 0.1 |
| 5-37 | | | | | | 0.3 | | 30 | | 85.73 | 0.3 |
| 5-38 | | | | | | 0.1 | | 30 | | 86.34 | 0.4 |
| 5-39 | | | | | | -0.2 | | 30 | | 261.09 | 9.9 |
| 5-40 | | | | | Constant current | | -100 | | 500 | 100 | 4.6 |
| 5-41 | | | | | | | -200 | | 250 | 100 | 16.9 |
| 5-42 | | Fe | | | Constant potential | 0.1 | | 30 | | 97.41 | 0.4 |
| 5-43 | | | | | | -0.2 | | 30 | | 331.2 | 16.2 |
| 5-44 | | | | | Constant current | | -100 | | 500 | 100 | 0.7 |
| 5-45 | | | | | | | -200 | | 250 | 100 | 1.9 |
| 5-46 | | SUS316 | | | Constant potential | 0.1 | | 30 | | 133.31 | 0.1 |
| 5-47 | | | | | | -0.2 | | 30 | | 331.75 | 7.9 |
| 5-48 | | | | | Constant current | | -100 | | 500 | 100 | 8.8 |
| 5-49 | | | | | | | -200 | | 250 | 100 | 2.9 |

[Example 6-1]

Electrolysis and hydrolysis were carried out in the same manner as in Example 5-45, except that the integrated quantity of electricity was set to 2,000 C.

It was confirmed from the XRD analysis that the precipitate precipitated on the working electrode through the electrode preparation step contained a polycrystalline body of C as the main component and $CaC_2$ as a byproduct.

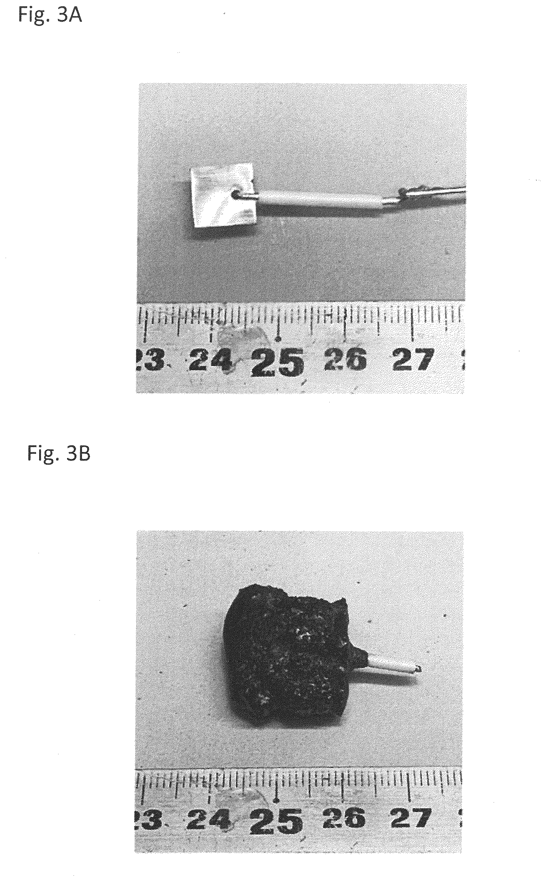

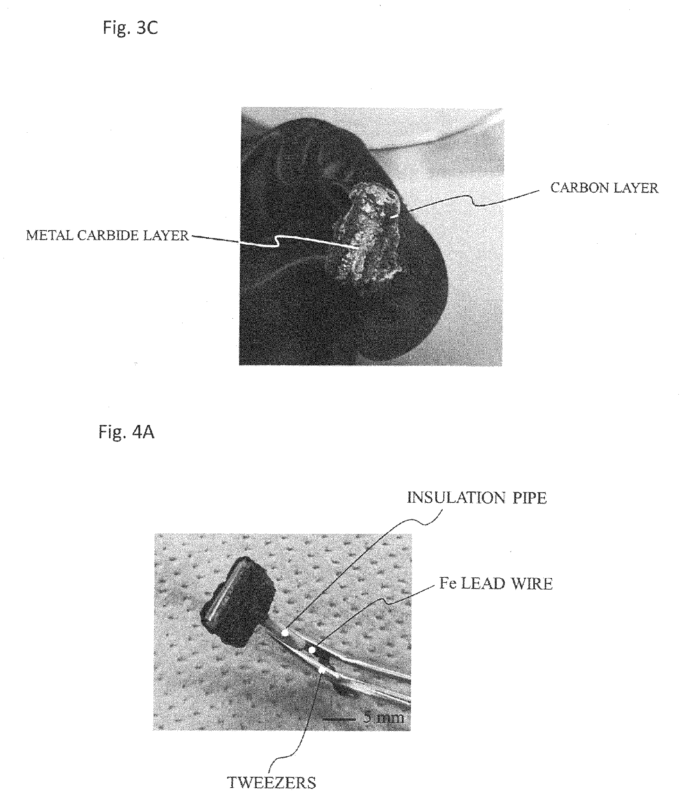

FIG. 3A is a photograph showing the appearance of the working electrode before the electrolysis step in Example 6-1. FIG. 3B is a photograph showing the appearance of the working electrode after the electrolysis step in Example 6-1. A black precipitate was confirmed on the surface of the working electrode, and the working electrode was found to be enlarged twice or more times larger than before. FIG. 3C is a photograph of a cross section of a precipitate precipitated on the working electrode after the electrolysis step in Example 6-1. As shown in FIG. 3C, the precipitate was confirmed to have a layered structure. Further, as the result of Raman spectroscopy, the generation of gas was confirmed only from the inner layer upon pouring water to the cross section, and firing was observed upon bringing the fire closer to the precipitate. Thus, the inner layer was confirmed to be a metal carbide layer containing calcium carbide as the main component, and the layer on the outer side was confirmed to be a carbon layer containing carbon and being substantially free from calcium carbide.

[Example 6-2]

Electrolysis and hydrolysis were carried out in the same manner as in Example 6-1, except that the integrated quantity of electricity was set to 500 C.

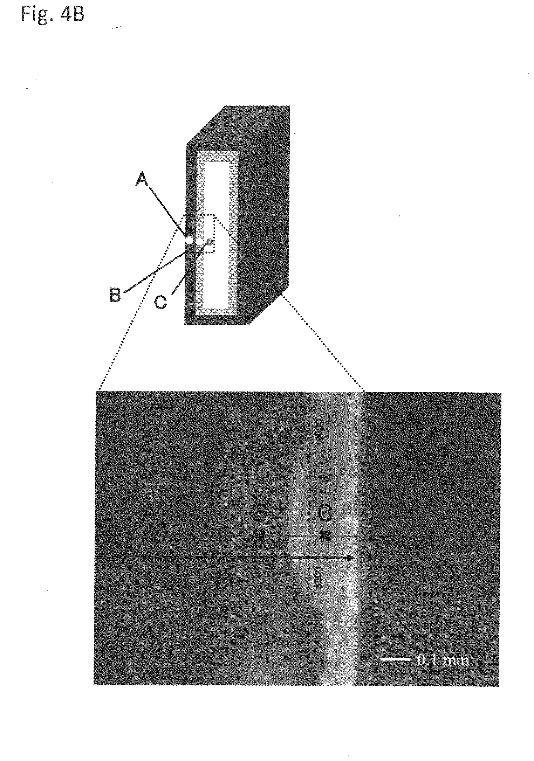

FIG. 4A is a photograph showing the appearance of the working electrode after the electrolysis step in Example 6-2. FIG. 4B is an optical microscope photograph obtained by observing a cross section of the precipitate precipitated on the working electrode after the electrolysis step in Example 6-2. FIG. 4B also shows a schematic cross sectional view of the working electrode after the electrolysis step. The optical microscope photograph corresponds to the part surrounded by a square in the schematic cross sectional view. In FIG. 4B, the point A indicates the black part of the outer side of the precipitate, the point B indicates the gray part of the inner side of the precipitate, and the point C indicates the Fe substrate of the working electrode. As shown in FIG. 4B, the precipitate was confirmed to have a layered structure.

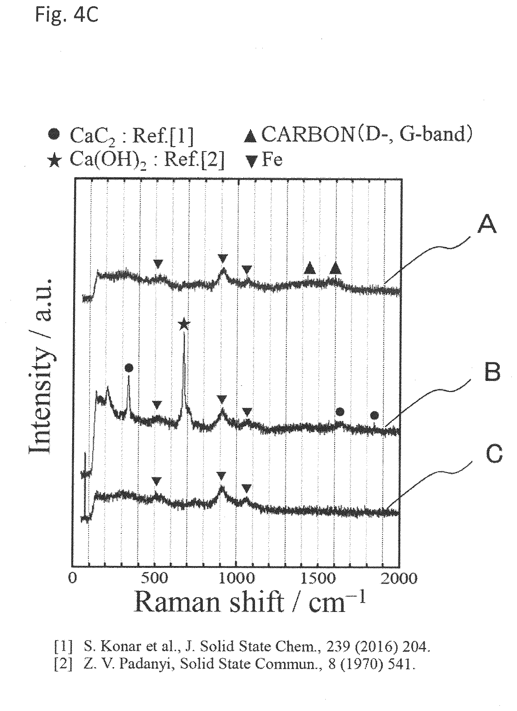

FIG. 4C is a graph showing the results of Raman spectroscopy in the points A to C. From these results, the inner side of the precipitate (point B) was confirmed to be a metal carbide layer containing calcium carbide as the main component, and the outer side of the precipitate (the point A) was confirmed to be a carbon layer containing carbon and being substantially free from calcium carbide.

[Example 7-1]

(1) Electrode preparation step

3.0 mol% of CaO was mixed with respect to NaCl, KCl, and $CaCl_2$ ($NaCl/KCl/CaCl_2$ = 33.4 mol%/11.6 mol%/55.0 mol%) (that is, $NaCl/KCl/CaCl_2/CaO$ = 32.4 mol%/1.3 mol%/53.4 mol%/2.9 mol%), and the mixture was dried in vacuum at 200°C and 100 Pa or less for 24 hours or more. This mixed salt was put in a container made of Ni, set in an electric furnace, and heated to 550°C. Thus, a molten salt of $NaCl$-$KCl$-$CaCl_2$-$CaO$ was obtained.

Then, a working electrode (1.0 cm $\times$ 1.0 cm, Fe), a counter electrode (platinum), and a reference electrode ($Ag^+/Ag$) were attached to the lid of the above container, and the container was sealed with this lid. $CO_2$ was blown into the molten salt at 550°C in the container at a flow rate of 100 mL/min for 60 min or more. While maintaining the $CO_2$ atmosphere in the gas phase part in the container, a voltage was applied for 30 minutes while maintaining the potential of the working electrode relative to the reference electrode at 0.3 V using a potentio-galvanostat. The potential of the working electrode is a value obtained by measuring the potential between the reference electrode ($Ag^+/Ag$) and the cathode, and calibrating the measured value based on the Na-K-Ca alloy precipitation potential.

A precipitate was confirmed to be precipitated on the working electrode. All the experimental operations were carried out in a glove box in which a high purity argon atmosphere was maintained.

(2) Electrolysis step

Subsequently, electrolysis was carried out by using a separately prepared electrolytic bath having the above composition and the electrode obtained in the above electrode preparation step. Specifically, a voltage was applied for 30 minutes while maintaining the potential of the working electrode relative to the reference electrode at 0.3 V using a potentio-galvanostat. A precipitate was confirmed to be precipitated on the working electrode. All the experimental operations, including the gas phase part in the container, were carried out in a glove box in which a high purity argon atmosphere was maintained.

(3) Production of hydrocarbon

The precipitate was put in a sealed test tube. Pure water was added to the test tube in small portions at ambient temperature (23°C), and the precipitate was hydrolyzed. The total amount of the water added was 2.5 ml. After bubbling was confirmed to be generated in the test tube, the test tube was allowed to stand until no bubbling was observed. Subsequently, 100 $\mu$l (microliter) of the gas in the test tube was collected using a gas tight syringe. The volume of the generated gas was measured by the water displacement method.

The obtained gas was subjected to GC-MS analysis using a gas chromatograph (GC) apparatus, and the production of $C_2H_2$ as the main component was confirmed. The precipitate precipitated on the working electrode by the electrolysis step is understood to contain $CaC_2$ as the main component because $C_2H_2$ gas was produced. Further, methane, ethane, and hydrogen were confirmed to be produced as byproducts. In addition, water, carbon dioxide, nitrogen, oxygen, and argon were contained. The amount of each component produced was also confirmed. The mass proportion of $C_2H_2$ in the recovered gas was sufficiently larger than 50% by mass.

With respect to $C_2H_2$ gas production, the faradaic efficiency through the electrode preparation step and the electrolysis step was calculated to be about 42.8%. The precipitate is understood to contain $CaC_2$ as the main component because $C_2H_2$ gas was produced.

[Examples 7-2 to 7-6]

Electrolysis and hydrolysis were carried out in the same manner as in Example 7-1, except that the electrolysis conditions were changed as shown in Table 7.

A precipitate was confirmed to be precipitated on the working electrode.

With respect to $C_2H_2$ gas production, the faradaic efficiency through the electrode preparation step and the electrolysis step are shown in Table 7. The precipitate precipitated on the working electrode by the electrolysis step is understood to contain $CaC_2$ as the main component because $C_2H_2$ gas was produced.

[Examples 8-1 to 8-6]

Electrolysis and hydrolysis were carried out in the same manner as in Example 7-1, except that the electrolysis conditions were changed as shown in Table 7, and 1.0 mol% of $CaC_2$ with respect to the molten salt was added to the molten salt in the electrolysis step.

A precipitate was confirmed to be precipitated on the working electrode. With respect to $C_2H_2$ gas production, the faradaic efficiency through the electrode preparation step and the electrolysis step are shown in Table 7. The precipitate precipitated on the working electrode by the electrolysis step is understood to contain $CaC_2$ as the main component because $C_2H_2$ gas was produced.

[Examples 9-1 to 9-6]

Electrolysis and hydrolysis were carried out in the same manner as in Example 7-1, except that the electrolysis conditions were changed as shown in Table 7, and 7.0 mol% of $CaC_2$ with respect to the molten salt was added to the molten salt in the electrolysis step.

A precipitate was confirmed to be precipitated on the working electrode. With respect to $C_2H_2$ gas production, the faradaic efficiency through the electrode preparation step and the electrolysis step are shown in Table 7. The precipitate precipitated on the working electrode by the electrolysis step is understood to contain $CaC_2$ as the main component because $C_2H_2$ gas was produced.

[Examples 10-1 to 10-3]

Electrolysis and hydrolysis were carried out in the same manner as in Example 7-1, Example 7-3, and Example 7-5, except that the electrolysis step was carried out by taking out the electrode once from the bath after the electrode preparation step, and 30 minutes later, putting the electrode again in the same bath. The electrolysis conditions were as shown in Table 7, and the electrolysis step was carried out in a $CO_2$ atmosphere.

A precipitate was confirmed to be precipitated on the working electrode. With respect to $C_2H_2$ gas production, the faradaic efficiency through the electrode preparation step and the electrolysis step are shown in Table 7. Although the amount of $C_2H_2$ gas produced was not measured, the precipitate precipitated on the working electrode by the electrolysis step is understood to contain $CaC_2$ as the main component because the faradaic efficiency of each of them was 0.1% or more.

[Table 7]

[Table 7]

EP 4 484 614 A1

The faradaic efficiency e with respect to $C_2H_2$ production was calculated as follows.

[Table 7]

Molten salt : NaCl-KCl-CaCl2-CaO

Examples 7-1 to 9-6: Electrode preparation step and electrolysis step were conducted by changing the bath.

Example 10-1 to 10-3: After electrode preparation step, the electrode was once taken out from the bath, and 30 min later, electrolysis step was conducted by putting the electrode in the same bath again.

Working electrode : Fe

| Example | Temperature /°C | Carbon source | Electrode preparation step | | | Electrolysis step | | | | | Total | | |
|---|---|---|---|---|---|---|---|---|---|---|---|---|---|
| | | | Potential /V | Electrolysis time /min | Quantity of electricity /C | Atmosphere | Additive(CaC2) /mol% | Potential /V | Electrolysis time /min | Quantity of electricity /C | Total quantity of electricity /C | Faradaic efficiency /% | Amount of gas produced /mL |
| 7-1 | 550 | CO2 | 0.3 | 30 | 129.28 | Ar | 0 | 0.3 | 30 | 12.75 | 142.03 | 42.8 | 1.5 |
| 7-2 | | | 0.1 | 30 | 147.25 | | | 0.3 | 30 | 499.87 | 647.12 | 0.1 | 0.8 |
| 7-3 | | | 0.3 | 30 | 110.98 | | | 0.1 | 30 | 13.63 | 124.61 | 42.2 | 1.8 |
| 7-4 | | | 0.1 | 30 | 154.91 | | | 0.1 | 30 | 46.01 | 200.91 | 34.5 | 1.7 |
| 7-5 | | | 0.3 | 30 | 115.80 | | | -0.2 | 30 | 252.93 | 368.73 | 11.7 | 4.5 |
| 7-6 | | | 0.1 | 30 | 138.03 | | | -0.2 | 30 | 243.75 | 381.78 | 10.3 | 4.5 |
| 8-1 | 550 | CO2 | 0.3 | 30 | 121.94 | Ar | 1.0 | 0.3 | 30 | 14.63 | 136.57 | 59.0 | 2.2 |
| 8-2 | | | 0.1 | 30 | 162.77 | | | 0.3 | 30 | 65.34 | 228.11 | 2.1 | 1.0 |
| 8-3 | | | 0.3 | 30 | 110.12 | | | 0.1 | 30 | 43.83 | 153.95 | 30.3 | 2.5 |
| 8-4 | | | 0.1 | 30 | 170.43 | | | 0.1 | 30 | 35.78 | 206.20 | 23.0 | 2.5 |
| 8-5 | | | 0.3 | 30 | 145.30 | | | -0.2 | 30 | 237.01 | 382.31 | 46.6 | 5.7 |
| 8-6 | | | 0.1 | 30 | 121.92 | | | -0.2 | 30 | 240.42 | 362.34 | 30.0 | 7.0 |
| 9-1 | 550 | CO2 | 0.3 | 30 | 151.01 | Ar | 7.0 | 0.3 | 30 | 19.90 | 170.91 | 36.0 | 2.5 |
| 9-2 | | | 0.1 | 30 | 140.48 | | | 0.3 | 30 | 48.05 | 188.54 | 16.1 | 2.0 |
| 9-3 | | | 0.3 | 30 | 110.78 | | | 0.1 | 30 | 20.01 | 130.79 | 107.8 | 3.2 |
| 9-4 | | | 0.1 | 30 | 174.28 | | | 0.1 | 30 | 43.00 | 217.28 | 46.2 | 3.0 |
| 9-5 | | | 0.3 | 30 | 99.74 | | | -0.2 | 30 | 265.20 | 364.94 | 19.3 | 4.6 |
| 9-6 | | | 0.1 | 30 | 147.08 | | | -0.2 | 30 | 174.82 | 321.90 | 12.4 | 7.3 |
| 10-1 | 550 | CO2 | 0.3 | 30 | 156.96 | CO2 | 0 | 0.3 | 30 | 54.3 | 211.27 | 0.1 | — |
| 10-2 | | | 0.3 | 30 | 180.02 | | | 0.1 | 30 | 68.81 | 248.84 | 0.3 | — |
| 10-3 | | | 0.3 | 30 | 143.15 | | | -0.2 | 30 | 218.6 | 361.75 | 9.1 | — |

First, the volume proportion of $C_2H_2$ contained in the recovered gas was calculated based on the total area of the peaks and the calibration curve obtained by GC-MS analysis. Then, the volume of $C_2H_2$ produced was calculated based on the volume occupied by the gas phase in the recovery container and the volume proportion of $C_2H_2$ in the calculated gas. Finally, the faradaic efficiency e (%) was calculated by the following expression assuming that the $C_2H_2$ produced was in standard conditions (0°C, 101 kPa).

[Expression 1]

$$e\ [\%] = \frac{\text{Actually measured amount of C2H2 produced [mol]}}{\text{Theoretical amount of C2H2 produced, determined from electrical quantity [mol]}} \times 100$$

$$= \frac{\dfrac{\text{Calculated volume of C2H2 produced [L]}}{\text{Volume of C2H2 in standard state (22.4) [L/mol]}}}{\dfrac{\text{Average current value during electrolysis [A]} \times \text{electrolysis time [s]}}{\text{Faraday constant (96485) [C/mol]} \times \text{Number of electrons in C2H2 (10) [-]}}} \times 100$$

As can be understood from Tables 1 and 4, the target second metal carbide is obtained with a high faradaic efficiency by any electrolysis methods. In particular, in the series of Examples 2, 3, and 4, the faradaic efficiency is further high. This indicates that carbon was sufficiently precipitated because the potential in the electrode preparation step was low. Above all, the faradaic efficiency in the series of Example 2 is significantly high. This is considered because the electrolysis step was carried out in an Ar atmosphere and the electrolytic bath was changed in the electrode preparation step and the electrolysis step, so that the carbonate ion concentration in the second molten salt was low.

As can be understood from Table 5 and Table 6, in particular, when SUS304 was used as the working electrode, hydrocarbons were successfully obtained from the obtained precipitate with a high faradaic efficiency. This indicates that the amount of $CaC_2$ precipitated in the electrode preparation step was large. It is understood from the large amount of $CaC_2$ that the amount of carbon precipitated is also large.

As can be understood from Table 7, hydrocarbons were successfully obtained from the obtained precipitate with a high faradaic efficiency by using the $NaCl\text{-}KCl\text{-}CaCl_2$ molten salt. It is desirable that the second molten salt be substantially free from carbonate ions ($CO_3^{2-}$) and the electrolysis step is carried out in an Ar atmosphere in terms of faradaic efficiency. Addition of $CaC_2$ to the molten salt as an additive is desirable in terms of faradaic efficiency. This is considered because $CaC_2$ produced on the working electrode was suppressed to be dissolved in the molten salt.

INDUSTRIAL APPLICABILITY

The production method of the present disclosure is useful in various fields because it enables the reaction to rapidly proceed at a relatively low temperature and a metal carbide to be efficiently obtained.

The present application claims priority based on JP 2023-064934 filed on April 12, 2023 and JP 2024-048291 filed on March 25, 2024, and the entire content of which is incorporated herein by reference.

**Claims**

1. A method for producing a metal carbide, comprising:

   electrode preparation comprising:

      preparing a first molten salt containing at least one first metal ion selected from the group consisting of alkali metal ions and alkali earth metal ions, and a carbonate ion, and
      applying a voltage to the first molten salt to precipitate a precipitate containing carbon on a first electrode, thereby obtaining a second electrode; and

   electrolysis comprising applying a voltage to a second molten salt containing at least one second metal ion selected from the group consisting of alkali metal ions and alkali earth metal ions using the second electrode to obtain a carbide composition containing a carbide of the second metal.

2. The method for producing a metal carbide according to claim 1, wherein the first electrode contains at least one selected from the group consisting of a transition metal and an alloy containing a transition metal.

3. The method for producing a metal carbide according to claim 1 or 2, wherein the first electrode contains an alloy containing iron.

4. The method for producing a metal carbide according to any one of claims 1 to 3, wherein the first electrode contains SUS304.

5. The method for producing a metal carbide according to any one of claims 1 to 4, wherein the second molten salt is substantially free from carbonate ions.

6. The method for producing a metal carbide according to any one of claims 1 to 5, wherein, in the electrolysis, the first molten salt used in the electrode preparation is used as it is as the second molten salt.

7. The method for producing a metal carbide according to any one of claims 1 to 6, wherein the second molten salt contains at least one selected from the group consisting of a halide ion and an oxide ion as an anion.

8. The method for producing a metal carbide according to any one of claims 1 to 7, wherein the first metal ion and the second metal ion are the same.

9. The method for producing a metal carbide according to any one of claims 1 to 8, wherein the carbide composition further contains at least one selected from the group consisting of carbon, a simple substance, a halide, a carbonate, an oxide, a hydride, and a peroxide of the second metal, and a simple substance, a halide, a carbonate, an oxide, and a carbide of the first metal.

10. The method for producing a metal carbide according to any one of claims 1 to 9, wherein the second molten salt contains at least one selected from the group consisting of a sodium ion, a lithium ion, and a potassium ion, and a calcium ion, as the second metal ion.

11. A method for producing a hydrocarbon, comprising:
electrode preparation comprising:

preparing a first molten salt containing at least one first metal ion selected from the group consisting of alkali metal ions and alkali earth metal ions, and a carbonate ion derived from carbon dioxide, and
applying a voltage to the first molten salt to precipitate a precipitate containing carbon on a first electrode, thereby obtaining a second electrode;
electrolysis comprising applying a voltage to a second molten salt containing at least one second metal ion selected from the group consisting of alkali metal ions and alkali earth metal ions using the second electrode to obtain a carbide composition containing a carbide of the second metal; and
gas generation comprising hydrolyzing the carbide of the second metal to obtain gas containing a hydrocarbon.

12. The method for producing a hydrocarbon according to claim 11, wherein the hydrocarbon is acetylene.

13. The method for producing a hydrocarbon according to claim 11 or 12, wherein the gas comprises acetylene as the hydrocarbon, and further comprises at least one selected from the group consisting of ethylene, ethane, methane, methylacetylene, propylene, butene, and hydrogen.

14. A carbon-containing member comprising:

a base, and
a metal carbide composition supported on the base, wherein the metal carbide composition contains a carbide of at least one second metal selected from the group consisting of alkali metals and alkali earth metals.

15. A carbon-containing member comprising:

a base;
a metal carbide layer covering at least a part of the base and containing a carbide of at least one second metal selected from the group consisting of alkali metals and alkali earth metals; and
a carbon layer covering at least a part of the metal carbide layer, containing carbon, and being substantially free from the second metal carbide.

Fig. 1

SECOND ELECTRODE
PREPARATION STEP

START

PREPARATION OF FIRST MOLTEN
SALT CONTAINING FIRST METAL
ION — S11

APPLICATION OF VOLTAGE
(PREPARATION OF SECOND
ELECTRODE) — S12

ELECTROLYSIS STEP

APPLICATION OF VOLTAGE
(PRODUCTION OF SECOND METAL
CARBIDE) — S2

END

Fig. 2

START

SECOND ELECTRODE
PREPARATION STEP

PREPARATION OF FIRST MOLTEN
SALT CONTAINING FIRST METAL
ION — S11

APPLICATION OF VOLTAGE
(PREPARATION OF SECOND
ELECTRODE) — S12

ELECTROLYSIS STEP

APPLICATION OF VOLTAGE
(PRODUCTION OF SECOND METAL
CARBIDE) — S2

HYDROLYSIS OF SECOND METAL
CARBIDE (PRODUCTION OF
HYDROCARBON) — S3

END

Fig. 3A

Fig. 3B

Fig. 3C

METAL CARBIDE LAYER — ... — CARBON LAYER

Fig. 4A

INSULATION PIPE

Fe LEAD WIRE

TWEEZERS

5 mm

Fig. 4B

Fig. 4C

● $CaC_2$ : Ref.[1]    ▲ CARBON(D-, G-band)
★ $Ca(OH)_2$ : Ref.[2]    ▼ Fe

[1]  S. Konar et al., J. Solid State Chem., 239 (2016) 204.
[2]  Z. V. Padanyi, Solid State Commun., 8 (1970) 541.

| INTERNATIONAL SEARCH REPORT | International application No. |
|---|---|
| | **PCT/JP2024/013769** |

**A. CLASSIFICATION OF SUBJECT MATTER**

*C25B 1/18*(2006.01)i; *C01B 32/935*(2017.01)i; *C01B 32/942*(2017.01)i; *C07C 1/32*(2006.01)i; *C07C 11/24*(2006.01)i; *C25B 1/135*(2021.01)i; *C25B 1/14*(2006.01)i; *C25B 11/046*(2021.01)i; *C25D 11/00*(2006.01)i
FI: C25B1/18; C01B32/935; C01B32/942; C07C1/32; C07C11/24; C25B1/135; C25B1/14; C25B11/046; C25D11/00 301

According to International Patent Classification (IPC) or to both national classification and IPC

**B. FIELDS SEARCHED**

Minimum documentation searched (classification system followed by classification symbols)

C25B1/18; C25B1/135-1/14; C25B11/046; C25D11/00; C25C3/02-3/04; C01B32/935-32/942

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2952591 A (UNION CARBIDE CORPORATION) 13 September 1960 (1960-09-13) examples | 14 |
| A | | 1-13, 15 |
| P, X | CN 116288415 A (WUHAN UNIVERSITY) 23 June 2023 (2023-06-23) examples | 14 |
| P, X | WO 2023/058619 A1 (THE DOSHISHA) 13 April 2023 (2023-04-13) examples | 14 |
| P, X | WO 2023/058620 A1 (THE DOSHISHA) 13 April 2023 (2023-04-13) examples | 14 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 June 2024** | **25 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

INTERNATIONAL SEARCH REPORT
Information on patent family members

International application No.

**PCT/JP2024/013769**

| Patent document cited in search report | | | Publication date (day/month/year) | Patent family member(s) | | | Publication date (day/month/year) |
|---|---|---|---|---|---|---|---|
| US | 2952591 | A | 13 September 1960 | (Family: none) | | | |
| CN | 116288415 | A | 23 June 2023 | (Family: none) | | | |
| WO | 2023/058619 | A1 | 13 April 2023 | JP | 2023-54787 | A | |
| WO | 2023/058620 | A1 | 13 April 2023 | JP | 2023-54787 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61178412 A
- JP 2018035328 A
- JP H02256626 A
- JP 2023064934 A
- JP 2024048291 A

**Non-patent literature cited in the description**

- **MCENANEY JM** ; **ROHR BA** ; **NIELANDER AC** ; **SINGH AR** ; **KING LA** ; **NORSKOV JK** ; **JARAMILLO TF**. A cyclic electrochemical strategy to produce acetylene from CO2, CH4, or alternative carbon sources. *Sustain Energy Fuels*, 2020, vol. 4 (2), 752-2759
- **UWE RUSCHEWITZ**. Binary and ternary carbides of alkali and alkaline-earth metals. *Coordination Chemistry Reviews*, 2003, vol. 244, 115-136